# EUROPEAN PATENT SPECIFICATION

(11) **EP 2 284 326 B1**
(45) Date of publication and mention of the grant of the patent: **20.04.2016**
(21) Application number: 10169787.8
(22) Date of filing: 16.07.2010
(51) Int. Cl.: E04B 2/74, H02G 3/38

(54) **Wall system and support body for use in a wall system**
Wandsystem und Stützkörper zur Verwendung in einem Wandsystem
Système de mur et corps de support à utiliser dans un système de mur

(30) Priority: 28.07.2009 NL 2003302
(43) Date of publication of application: 16.02.2011
(73) Proprietor: Bohebitat Building Products B.V., 2271 EG Voorburg (NL)
(72) Inventor: Koteris, René Nicolaas Bernardus, 3998 NG, Schalkwijk (NL); Sturmans, Mathijs Maria Franciscus, 5361 AZ, Grave (NL)
(74) Representative: van Kooij, Adriaan

(56) References cited:
- DE-A1- 3 834 951
- US-A- 2 296 609
- US-A- 5 339 585

## Description

The present invention relates to a wall system for supporting a wall provided with at least one profile of at least substantially C-shaped cross-section. The invention also relates to a support body for use in the wall system.

Many wall systems, for instance system walls, are constructed by first placing C-shaped profiles, or uprights, at a mutual distance from each other. Cover plates, or panels, can then be arranged on these uprights in order to form a wall. The uprights used in such a wall system have standard dimensions. These standard dimensions make it possible for different components of the wall system, for instance the cover plates and connecting means, to also be manufactured with standard dimensions.

In order to enable guiding of cables under such a wall system wall systems are known wherein the uprights are placed at a distance from the ground surface. The space under these uprights can then be used to hold for instance heating and water pipes, electricity and data lines. This space is then preferably also available once'the wall is completely finished. A removable skirting can for instance be provided for this purpose. The space at the bottom of the wall system can be accessed by removing the skirting.

It is a drawback of these known systems that they are of complicated construction, whereby the assembly of such a wall system is a labour-intensive process.

US 5,339,535 describes a swiveling support for supporting a divider panel. The support is provided with a seating member coupled to a spacer leg to allow mutual rotation. The seating member is provided with lips for receiving the wall there between. Bosses on the seating member are arranged to be received in corresponding grooves in the bottom surface of the wall.

The present invention has for its object, among others, to provide an efficient, inexpensive and/or simple wall system for supporting a wall provided with at least one profile of at least substantially C-shaped cross-section.

The wall system according to the invention comprises for this purpose at least one support body for supporting the profile at a distance from a ground surface, wherein at least three fingers extend from the support body and wherein at least one of the fingers is arranged offset for the purpose of forming a connecting plane between the fingers for receiving a wall of the profile. The support body provided with the at least three fingers provides for a simple connection of the profile to the support body. Since at least one of the fingers is arranged offset, a connecting plane is formed between the three fingers. The depth of this connecting plane corresponds to the thickness of the wall of the profile. A strong connection is provided simply by arranging the profile between the fingers.

The fingers preferably extend at least substantially in a plane, wherein a finger is arranged offset in a direction transversely of this plane. The plane in which the fingers extend extends parallel to the formed connecting plane. A connecting plane is formed between the three fingers by arranging at least one finger offset out of this plane. At least two fingers more preferably extend on either side of the connecting plane. In the connected situation at least two fingers extend here on the one side of the wall of the profile and at least one finger extends on the other side of the wall of the profile. The wall of the profile is here held firmly between the fingers. This limits movement of the profile relative to the support body in a direction transversely of the wall of this profile. Rotation about the longitudinal axis of the profile is hereby also limited.

It can however also be possible that for instance two of the fingers extend on either side of the wall of the profile in the connected situation, wherein the wall is held between the fingers. Such an assembly can for instance be formed by arranging a recess in a single finger, wherein the recess forms the connecting plane. The recess then divides the single finger into two fingers extending on either side of the wall of the profile.

It can also be possible to form integrally at least two fingers extending on one side of the connecting plane. A single finger can be provided here on one side of the connecting plane, which finger extends at least over a part of the width of the wall of the profile. This width provides for limiting of the movement between the support body and the profile transversely of the wall system and limits rotation about the longitudinal axis of the profile.

According to a preferred embodiment of the wall system according to the invention, the support body takes a substantially plate-like form, wherein the fingers extend from an upper side of the support body, wherein at least one finger extends outside the plane of the support body in a plane parallel to this plane. The fingers extend here from the upper side of the plate-like support body, wherein at least one finger extends outside the plane of the support body. An efficient support body is provided by for instance pressing a finger out of the plane of the support body. The plate-like support body is preferably manufactured from a metal.

Each of the fingers for forming the connecting plane more preferably extends outside the plane of the support body. Owing to the arrangement of each of the fingers offset from the plane of the support body, the connecting plane will extend in the plane of the support body. The wall of the profile rests here on top of the support body, which provides for a good support.

The base of an offset finger extending obliquely relative to the support body more preferably forms a support surface. A connection between the finger and the support body forms a support surface here. If each of the fingers for forming a connecting plane is arranged offset, each of the bases extending obliquely of the support body forms a support surface. In the connected situation the wall then extends straight above the support body, wherein the profile rests on the support surfaces of the fingers.

According to a further preferred embodiment, the support body is manufactured from plastic. The support body can then also take a plate-like form, although it is also possible to provide different shapes for the purpose of forming a connecting plane between the fingers.

According to a further preferred embodiment of the wall system according to the invention, the support body is adapted to receive the rear wall of the C-shaped profile between the fingers, wherein two fingers extend from the support body at a mutual distance substantially corresponding to the width of the real wall of the C-shaped profile. In the arranged position the two fingers extend against the two side walls of the C-shaped profile, so preventing movement transversely of the surfaces of the side walls of the C-shaped profile in a lateral direction of the wall system. Furthermore, the two fingers preferably extend against the rear wall of the C-shaped profile so that they also contribute toward limiting the movement transversely of the rear wall of the C-shaped profile in the longitudinal direction of the wall system.

It is possible here to arrange on the support body a further finger which is arranged offset relative to the two fingers, so that a connecting plane is formed between these three fingers. Provided in this way is an efficient support body which limits movement of the upright in the longitudinal direction and in the width direction relative to the support body.

According to a further preferred embodiment of the wall system according to the invention, the two fingers do however extend in the connecting plane, wherein at least two other fingers are arranged on either side offset from the connecting plane. Since a C-shaped profile is provided as standard with two recesses on its rear wall close to the side walls, the two fingers can be received in these recesses. The side wall offset relative to these recesses can then be received in the connecting plane between the offset fingers. Since the two fingers extend in the connecting plane formed by the offset other fingers, a symmetrical support body is provided. This makes it possible to place the C-shaped profile in two ways. That is, with the rear wall of the profile in both directions as seen in the longitudinal direction of the wall system. This enables the use of a single support body irrespective of the direction of the opening of the C-shaped profile.

A further preferred embodiment of a wall system according to the invention also comprises connecting means for connecting a skirting, wherein the system also comprises spacer means for holding the skirting at a predetermined distance from the wall system, wherein the spacer means comprise at least one rotatable tongue.

The spacer means preferably comprise a surface wherein the tongue is formed by a recess extending in the surface. A tongue is in this way provided in simple manner for holding at a predetermined distance the wall system, for instance the support body, and the skirting to be arranged.

The tongue is preferably adapted to engage on a stop or spacer surface in rotated position, and wherein the tongue extends in non-rotated position in a plane transversely of the visual surface of the skirting.

The tongue is preferably rotatable about an axis extending in longitudinal direction of the wall. The axis preferably extends here parallel to the plane of the skirting to be connected. In the connected position of the skirting the outer end of the tongue can be placed at a predetermined distance from the wall system by rotating the tongue about the axis. This distance can be adjusted by rotating the tongue to greater or lesser extent about the axis. When a skirting is subsequently arranged on the wall system, the skirting will rest against the tongue, or the tongue against for instance the support body, so as to thus prevent the skirting being pressed further against the wall system. The connecting means for connecting a skirting can for instance comprise a channel for receiving a tongue of the skirting.

According to a further preferred embodiment of the wall system according to the invention, the spacer means comprise a plurality of tongues for holding the skirting at different distances from the wall system.

In the case of the tongue which is rotatable about an axis extending in the longitudinal direction of the wall, at least two of the tongues preferably have a different length. The distance between the wall system and the skirting can now be selected by making use of a tongue of an appropriate length. The selected tongue can now be rotated about the axis such that the tongue extends perpendicularly of the surface of the skirting in the connected situation. This prevents the possibility of the tongue rotating when the skirting is for instance pressed in. By providing a plurality of tongues, wherein the length of each of the tongues corresponds to the distance between the rotation axis and the arranged skirting, such a connection perpendicular to the surface of the skirting can be provided at any of the distances. It is however also possible to arrange the tongues at different distances as seen in the connecting direction.

According to a further preferred embodiment of the wall system according to the invention, the spacer means comprise a surface extending in the longitudinal direction of the wall, wherein the tongues are formed by recesses extending in the surface. A tongue is then formed between two recesses in the surface. Tongues of different length can be provided by varying the length of the recesses. One of the tongues can serve as spacer means for a skirting by rotating this tongue out of the plane.

The tongues preferably comprise a passage at their rotation axis, wherein the size of the passage is inversely proportional to the length of the tongue. The passage enables the rotation, or pushing out, of a tongue without having to apply much force. Since a longer tongue is easier to push out due to the longer arm, this passage can be given a smaller form than for instance in the case of a very short tongue. The surface is preferably manufactured from a flexible material, preferably metal, so that a tongue can be rotated by pressing a tongue out of this surface.

According to a further preferred embodiment, the tongue of the spacer means is rotatable about an axis lying substantially perpendicularly of the visual surface of the skirting, or transversely of the longitudinal direction of the wall system. In rotated position a side edge of the tongue, an edge adjacent of the rotation axis, then serves as engaging surface for holding the skirting at a distance from for instance the support body. In the case multiple tongues are applied, the engaging surfaces of at least two tongues extend at a mutually perpendicular distance from each other. The distance of the skirting can then be determined through the choice of the tongue.

The engaging surfaces of the tongues are adapted to engage on a spacer surface. The spacer surface here has a normal with a component in the connecting direction, just as the engaging surface of the tongue in rotated position. In connected position the engaging surface of the tongue and the spacer surface lie against each other in order to limit movement in the connecting direction.

The spacer means preferably comprise at least two tongues adapted to hold the skirting at the same distance from the connecting device. This provides for a stable positioning. The connecting means can for instance comprise multiple sets of a plurality of tongues as discussed above. One tongue in each set can then be folded out in order to set the distance.

A further preferred embodiment of the wall system according to the invention further comprises an at least substantially U-shaped connecting profile for receiving the support body, wherein a side wall of the U-shaped connecting profile is provided with the spacer means. The connecting profile is preferably adapted here to receive a plurality of support bodies. Other forms of a connecting profile are however not precluded.

For the purpose of manufacturing a wall system a connecting profile is then first arranged on a ground surface and multiple support bodies are then arranged in the connecting profile. Uprights, or C-shaped profiles, can subsequently be arranged on these support bodies. The connecting profile is at least substantially U-shaped, wherein the base of the U-shape is arranged on a ground surface. At least one of the side walls of the U-shaped profile here comprises a surface provided with the plurality of tongues. These tongues make it possible to arrange a skirting at a predetermined distance from the connecting profile.

Since holding a skirting at a predetermined distance from a wall system is also relevant in other types of wall system, the use of the spacer means, for instance in the form of a tongue, is not limited to wall systems provided with a support body as described above. The spacer means can particularly be applied in any wall system, for instance provided with connecting bodies for connecting a skirting to a wall. The connecting bodies can be embodied as support bodies for supporting a wall. Such a system can for instance be provided with a connecting profile. It is not however essential for the system to support a wall. This can therefore relate to connecting bodies instead of support bodies. It is for instance possible to apply the spacer means in a channel or rebate in a wall, wherein connecting bodies can be used to connect a skirting.

The connecting profile can be used to arrange a skirting or similar object relative to a surface, in particular a wall. The connecting profile, preferably provided with the surface provided with recesses for forming the tongues, makes it possible to arrange the skirting at a predetermined distance from this connecting profile, whereby the distance between the skirting and the surface can also be adjusted. The form of the connecting profile can be modified to the specific application.

By way of example, it may be possible to utilize such a connecting profile in for instance a rebate arranged in an underside of a wall. This rebate or channel on the underside of a wall can then be used to hold conduits. A skirting can'then be placed efficiently at a random distance using the connecting profile. The connecting profile can hereby be utilized in channels with differing and even varying depths. In this embodiment the connecting profile preferably has an at least substantially C-shaped cross-section. The connecting profile is herein simple to place in the channel arranged in the wall.

According to a further preferred embodiment, the wall system also comprises a skirting, wherein the skirting comprises spacer means, wherein the support body and/or the connecting profile comprises at least one spacer surface co-acting with the spacer means of the skirting. According to this embodiment the skirting is provided with the spacer means in the form of a rotatable tongue. Formed by bending outward or rotating the tongue is an engaging surface which, when the skirting is arranged, makes contact with a spacer surface or a component of the support body or the connecting profile. Further movement of the skirting in the connecting direction is thus limited. The spacer means are preferably formed in a plane extending transversely of the visual surface of the skirting. This plane more preferably also extends in the longitudinal direction of the skirting.

This surface can for instance be incorporated in the connecting means for connecting a skirting to the support body or a connecting profile, for instance in the form of a channel. In rotated position the tongue can then engage on the inlet side of the channel, thereby preventing further movement in the connecting direction. The inlet side then serves as spacer surface.

A further preferred embodiment of the wall system comprises a panel support body adapted to support a panel of the wall system, wherein the panel support body can be arranged adjustably, preferably slidably, in the width direction of the wall system on the top side of the support body. Particularly if the support body takes a plate-like form it can be difficult to properly support a panel of the wall system. A panel can be supported efficiently by providing a panel support body. The panel support body preferably has for this purpose a width greater than the width of the support body. The panel support body can here be arranged adjustably on the support body. This makes it possible to receive panels of differing thickness.

According to a further preferred embodiment, the support body and the panel support body comprise a co-acting cam and follower connection for adjustable connection relative to each other.

This provides for a simple slidable connection. The support body and the panel support body each preferably also comprise at least one stop surface, wherein the stop surfaces are adapted to transmit forces in at least substantially vertical direction from the panel support body to the support body. An adjustable transmission of force is in this way provided in efficient manner. The stop surfaces and a support surface of the panel support body for holding the panel more preferably extend on either side of the cam and follower connection. This provides for a strong and compact connection.

The invention also relates to a support body, panel support body and skirting for use in the system according to the invention.

The invention will be further elucidated with reference to the figures shown in the drawing, in which:
- Figure 1 shows a schematic outline of the wall system;
- Figures 2-4 show different schematic views of the support body;
- Figures 5 and 6 show the support body in two different connected situations;
- Figure 7 shows a schematic side view of the spacer means;
- Figure 8 shows a schematic detail view of the spacer means;
- Figure 9 shows schematically the support body and the panel support body in unconnected situation;
- Figures 10 and 11 show schematically the support body and the panel support body in connected situation; and
- Figures 12 and 13 show schematically a further embodiment of the spacer means.

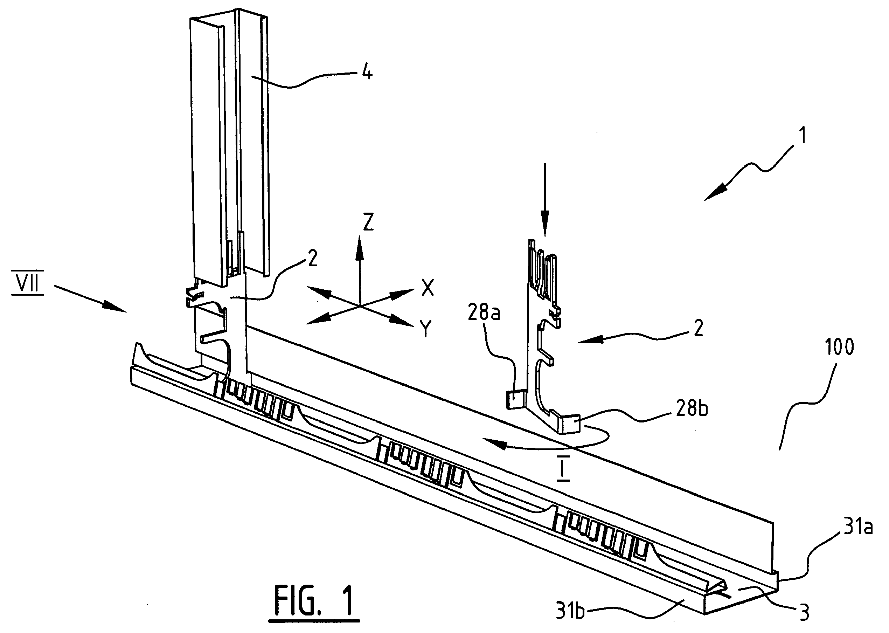

The wall system 1 according to the invention is shown schematically in perspective in figure 1. A U-shaped connecting profile 3 is arranged on a ground surface 100. Connecting profile 3 is provided with upright walls 31a and 31b between which a support body 2 can be arranged. Support body 2 is substantially plate-like and provided on the underside with two bent parts 28a, 28b which can be arranged with a rotating movement in the direction I in connecting profile 3. In the arranged position as shown on the left in figure 1, bent parts 28a and 28b lie against respective side walls 31a and 31b so that a firm connection is obtained.

An upright 4 can be arranged on support body 2. Upright 4 is part of a system wall and can be used for arranging plate material thereon for the purpose of forming a wall.

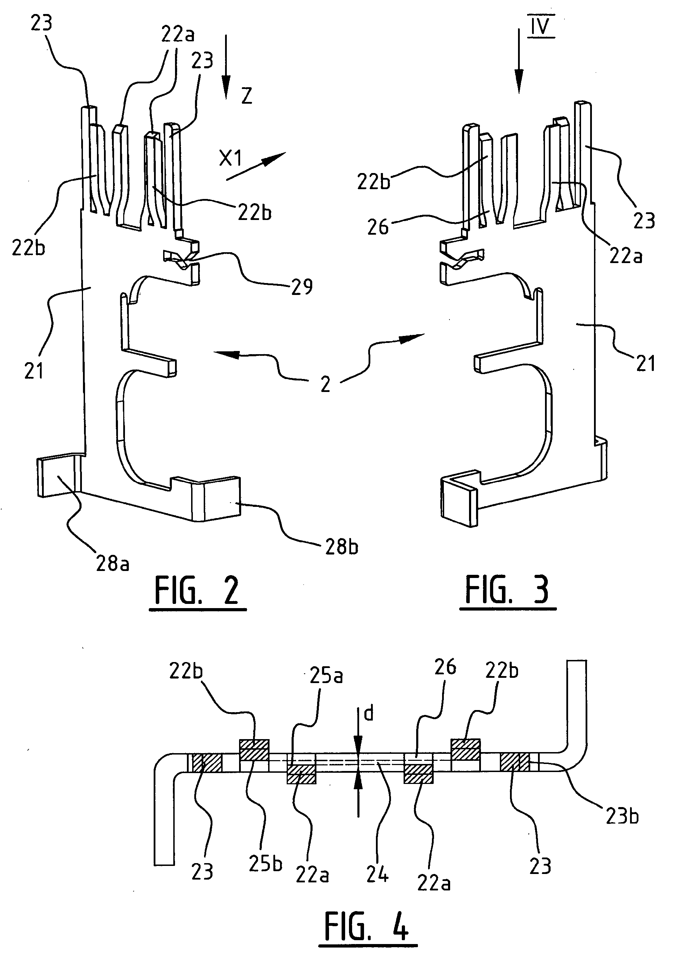

Figures 2-4 show support body 2 in more detail. Support body 2 takes a plate-like form and is manufactured in this example from sheet steel. Fingers 22a, 22b and 23 extend from the upper side of support body 2. Fingers 22a and 22b are arranged offset relative to the plane of support body 21. Fingers 22a are pushed in a direction X1 relative to the support body, while fingers 22b are pushed in an opposite direction. Fingers 23 extend in the plane of support body 21. Inclining surfaces 26 are formed by pushing fingers 22a and 22b outward relative to support body 21. These surfaces 26 can serve as support surface for upright 4.

Formed between fingers 22a and 22b is a connecting plane 24 as shown in schematic top view in figure 4. The surfaces 25a and 25b of fingers 22a and 22b facing toward connecting plane 24 are situated here at a distance d. Connecting plane 24 hereby also has a depth d corresponding to the width of the wall to be received of upright 4.

For the purpose of connecting an upright 4 to a support body 21 an upright 4 can be moved over the fingers in connecting plane 24 in a direction indicated with Z. In order to facilitate arranging of an upright 4 on the support body the top sides of fingers 22a, 22b and 23 take a chamfered form. This automatically provides for a good alignment of upright 4 relative to fingers 22a, 22b and 23 during connection. When upright 4 is arranged, the underside of the upright will rest on the inclining surfaces 26. In this situation movement of upright 4 in the Z-direction is limited by the force of gravity.

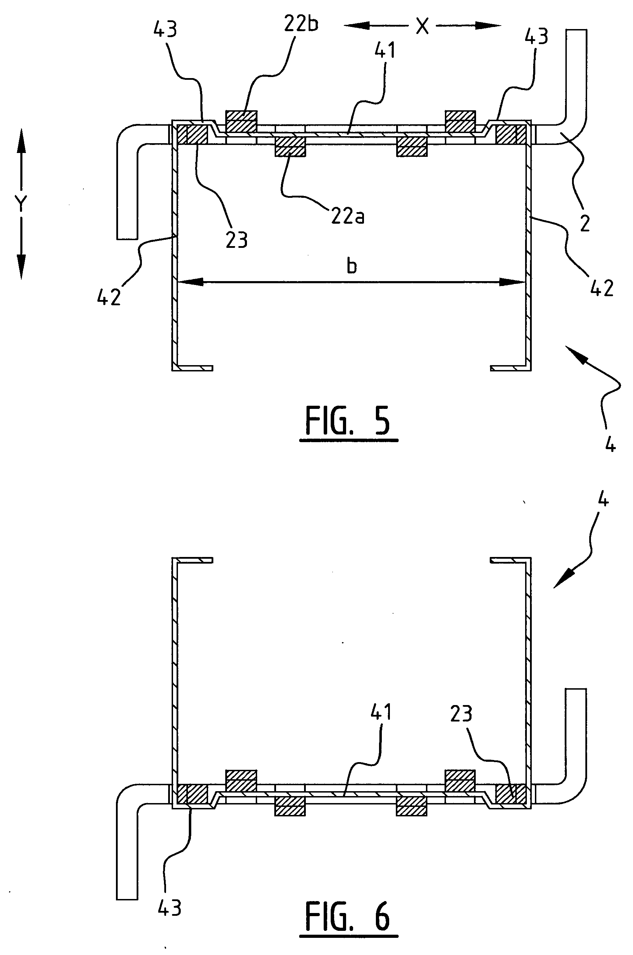

Figures 5 and 6 show an upright in two connected situations. As shown, upright 4 has an at least substantially C-shaped cross-section, wherein rear wall 41 of upright 4 can be received in connecting plane 24 of support body 2. The rear surface of upright 4 is provided with two recesses 43, wherein the rear wall extends between recesses 43 in offset position relative to these recesses 43. In the connected situation fingers 23 extend in these recesses 43. The distance between fingers 23, and more particularly between the side surfaces 23b as shown in figure 4, corresponds to the width B of upright 4. Fingers 23 hereby lie against side walls 42 of upright 4 so that they limit movement of upright 4 relative to support body 2 in the width direction of the wall system, indicated schematically with X.

Since fingers 23 moreover lie against recesses 43 of rear wall 41, they also limit the movement between support body 2 and upright 4 in the longitudinal direction of the wall system, indicated with Y. Fingers 22a and 22b, which in the connected situation extend on either side of rear wall 41, also limit the movement of upright 4 and support body 2 in the Y-direction.

In figure 5 the opening of upright 4 faces downward in the figure, while in figure 6 the opening of upright 4 faces upward. Because support body 2 with its fingers 22a, 22b and 23 takes a symmetrical form relative to connecting plane 24, the support body is able to receive upright 4 in both situations. It is moreover advantageous here that rear wall 41 of the upright extends above body 21 in both situations, so providing for a good transmission of force.

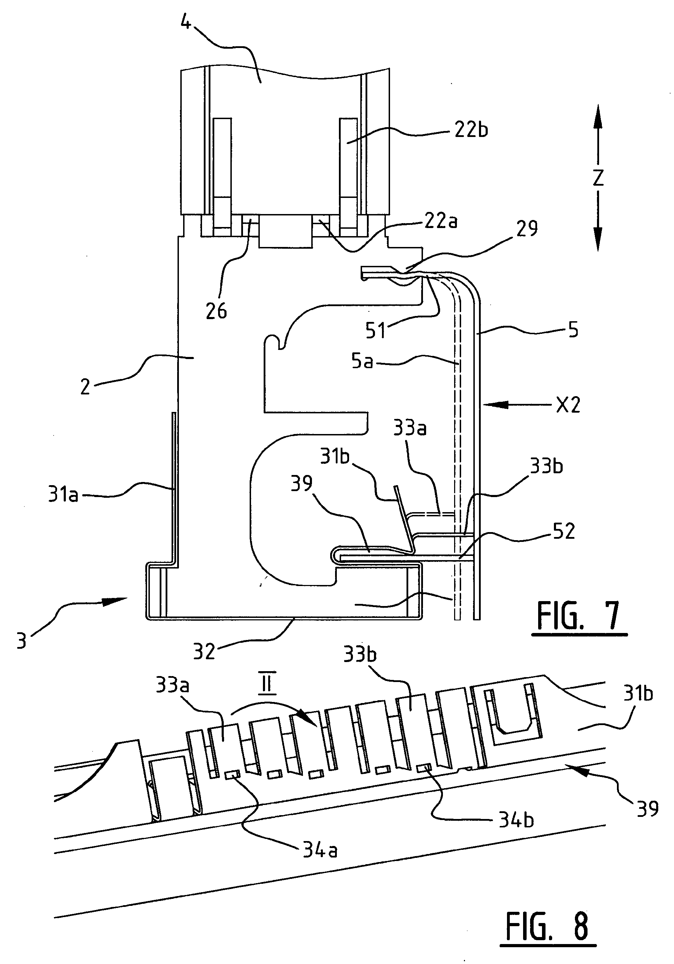

Figure 7 shows a side view of the wall system of figure 1. As clearly shown, the underside of upright 4 rests on the inclining surfaces 26 of the undersides of fingers 22a and 22b. This provides for a good clamping connection and limits movement of the upright relative to body 2 in a direction indicated with Z.

As shown, support body 2 is also provided with connecting means for a skirting 29. Provided in this embodiment is a channel provided with protrusions for engaging on a tongue 51 of a skirting 5. Connecting profile 3 is moreover provided with a channel 39 for receiving a second tongue 52 of skirting 5.

Spacer means are provided in order to enable arrangement of skirting 5 at a predetermined distance from connecting profile 3. The spacer means are embodied as tongues, of which tongues 33a and 33b are shown schematically in figure 8. The tongues are arranged in a side wall 31 of connecting profile 3 and surface 31 extends here in the longitudinal direction, indicated with Y, of wall system 1. By bending for instance a tongue 33a in a direction indicated with II the outer end of tongue 33a can determine the distance between a skirting 5a and connecting profile 3 as indicated with broken lines in figure 7.

Should a greater distance be desired between skirting 5 and connecting profile 3, a longer tongue, for instance tongue 33b, can then be bent outward as also shown in figure 7. A skirting 5 can be arranged at a predetermined distance from the wall system by selecting a tongue of an appropriate length.

In order to make bending of the tongues easier, recesses 34a and 34b are provided on the underside of the tongues. Since it is easier to bend a longer tongue 33b, passage 34b can take a smaller form compared to for instance a passage 34a.

As shown in figure 7, tongues 33a and 33b extend in the connected situation at least substantially perpendicularly relative to the plane of skirting 5 or 5a. Displacement of skirting 5 in a direction indicated with X2, for instance as a result of impacts against skirting 5, is then not likely to result in bending back of tongues 33a or 33b.

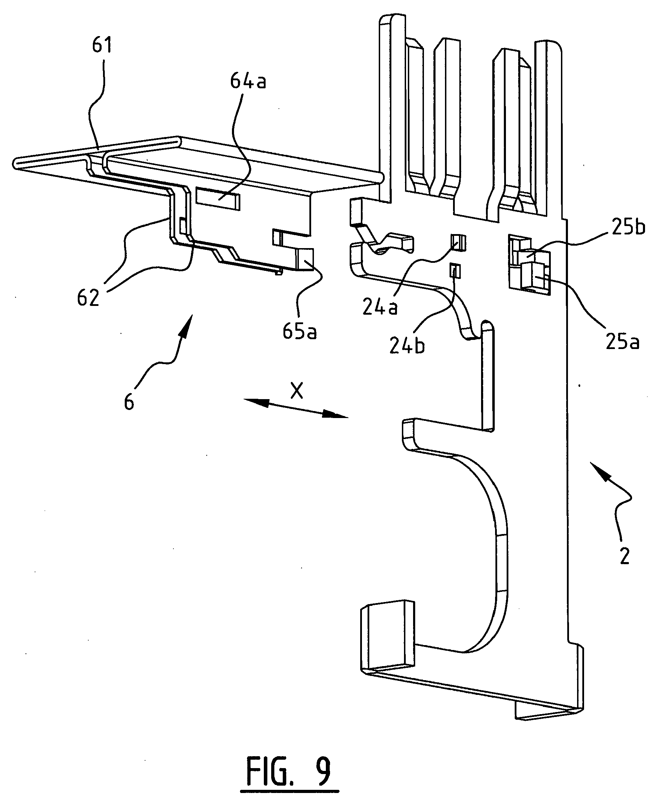

Figure 9 shows schematically the panel support body 6. Body 6 is adapted to support a panel (not shown) of a wall. Despite the narrow upper part of support body 2 it is possible to receive such a panel efficiently therewith. Panel support body 6 is provided with a support surface 61 for supporting a panel. Panel support body 6 is moreover provided with two walls 62 between which body 2 can be received. This provides for a firm connection.

In order to enable adjustment of body 6 in the width direction of the wall system, indicated with X, walls 62 are provided with slots 64a and 64b. Protrusions 24a and 24b of support body 2 can be received in these slots 64a and 64b.

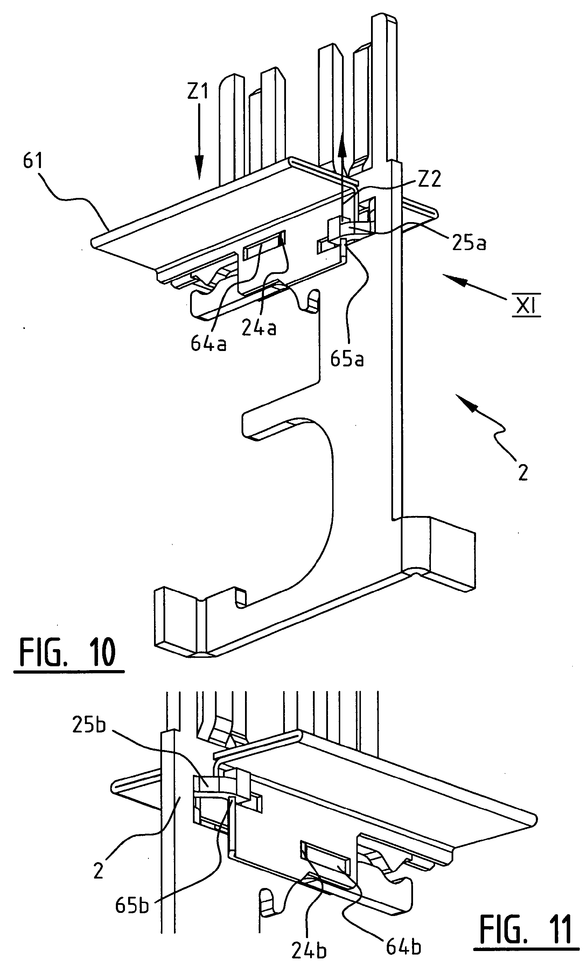

Support body 2 is moreover provided on both sides with protrusions 25a and 25b. Protrusions 25a and 25b are formed by pressing out the plate material of support body 2. In the connected situation as shown in figures 10 and 11, protrusions 25a and 25b form stop surfaces for engagement with parts 65a and 65b of panel support body 6. Since protrusions 65a and 65b extend over a part of the width of support body 2, the co-acting stop surfaces of parts 65a, 65b and 25a, 25b provide for a good transmission of forces. They moreover allow adjustment in a direction X of panel support body 6 relative to support body 2. Parts 65a and 65b moreover provide a guide for simple arrangement of support body 2 between walls 62.

In use the panel will exert a force on support surface 61 in a direction indicated with Z1. This force will be transmitted in a direction Z2 from parts 65a and 65b to protrusions 25a and 25b. This ensures a strong connection between body 2 and body 6.

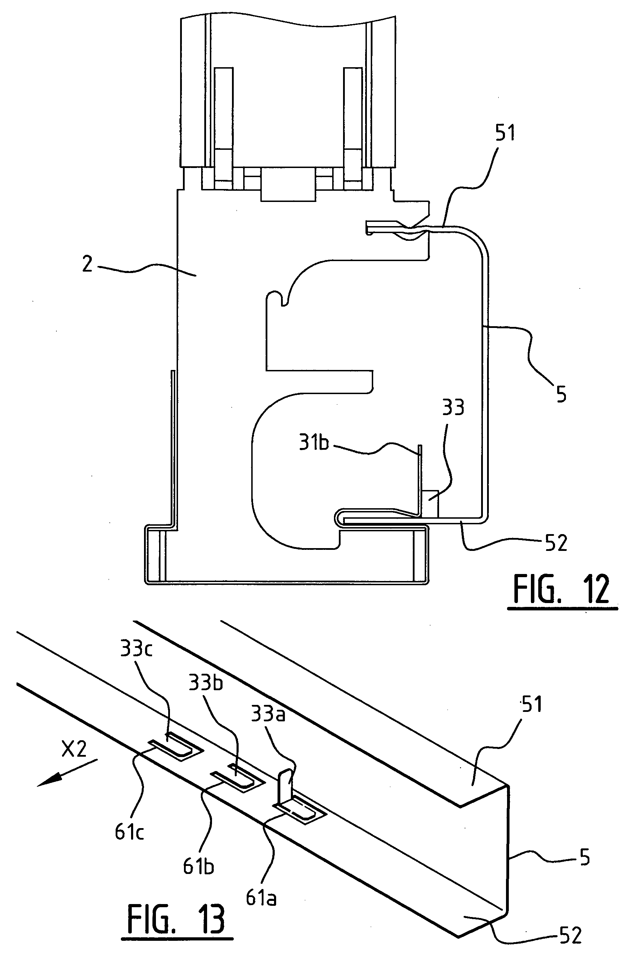

Figure 12 shows another embodiment of the spacer means. In this embodiment tongues 33 are arranged on the second tongue 52 of skirting 5. Figure 12 shows that tongue 33 engages on surface 31b of profile 3, which in this example serves as spacer surface.

Figure 13 shows the skirting in perspective, wherein it can be seen that multiple tongues 33a-c are arranged. The edges indicated by 61a-c here form the engaging surfaces of tongues 33a-c. When the tongue as shown in figure 13 is arranged on a support 2, engaging surface 61a of tongue 33a will then eventually move against edge 31b, see figure 12, and so limit further movement in connecting direction X2.

If however a different distance is desired, tongue 33a can be rotated back and tongue 33b can be folded out. Engaging surface 61b of tongue 33b extends at a different distance as seen in connecting direction X2 than engaging surface 61a of tongue 33a. Similarly, engaging surface 61c of tongue 33c extends at yet another distance. The distance between visual surface 41 of skirting 5 and profile 3, and thereby the support 2, can be set by selecting one of the three tongues 33a-c. In order to provide a stable arrangement the skirting is provided along its length with multiple sets of tongues, one of which is shown in figure 13.

It is noted that the invention is not limited to the shown embodiments, but also extends to other preferred variants falling within the scope of the appended claims.

## Claims

1. Support body (2) for supporting a profile (4) at a distance from a ground surface, wherein at least three fingers (22a, 22b) extend from the support body (2), **characterized in that** the support body (2) is arranged for supporting a profile (4) of at least substantially C-shaped cross-section having a wall (41) with a thickness (d) and wherein at least one of the fingers is arranged offset for the purpose of forming a connecting plane (24) between the fingers (22a, 22b) for receiving the wall (41) of the profile (4), wherein the depth (d) of the connecting plane (24) corresponds to the thickness (d) of the wall (41) of the profile (4) for limiting movement of the profile (4) relative to the support body (2) in a direction transversely of the wall (41) of this profile (4) and for limiting rotation about the longitudinal axis of the profile (4).

2. Support body (2) according to claim 1, wherein the fingers extend at least substantially in a plane, wherein a finger is arranged offset in a direction transversely of this plane.

3. Support body (2) as claimed in claim 1 or 2, wherein at least two fingers extend on either side of the connecting plane (24).

4. Support body (2) as claimed in claim 1, 2 or 3, wherein the support body (2) takes a substantially plate-like form, wherein the fingers (22a, 22b) extend from an upper side of the support body (2), wherein at least one finger extends outside the plane of the support body in a plane parallel to this plane.

5. Support body (2) as claimed in claim 4, wherein each of the fingers (22a, 22b) for forming the connecting plane (24) extends outside the plane of the support body (2).

6. Support body (2) as claimed in any of the foregoing claims 1-5, wherein the support body (2) is adapted to receive the rear wall (41) of the C-shaped profile (4) between the fingers, wherein two fingers (23) extend from the support body (2) at a mutual distance substantially corresponding to the width of the rear wall (41) of the C-shaped profile (4).

7. Support body (2) as claimed in claim 6, wherein the two fingers (23) extend in the connecting plane (24), wherein at least two other fingers (22a, 22b) are arranged on either side offset from the connecting plane (24).

8. Wall system comprising at least one profile (4) of at least substantially C-shaped cross-section having a wall (41) with a thickness (d) and at least one support body (2) as claimed in any of the foregoing claims 1-7.

9. Wall system according to claim 8, also comprising connecting means for connecting a skirting (5), wherein the wall system also comprises spacer means for holding the skirting (5) at a predetermined distance from the wall system, wherein the spacer means comprise a rotatable tongue (33 a-c).

10. Wall system as claimed in claim 9, wherein spacer means comprise a surface (31, 52) wherein the tongue is formed by a recess extending in the surface (31, 52).

11. Wall system as claimed in claim 9 or 10, wherein the spacer means comprise a plurality of tongues (33 a-c) for holding the skirting (5) at different distances from the wall system.

12. Wall system as claimed in claim 9, 10 or 11, wherein the tongue (33 a-c) of the spacer means is rotatable about an axis (X2) lying substantially perpendicularly of the visual surface of the skirting (5).

13. Wall system as claimed in claim 9, 10 or 11, wherein the tongue (33 a-c) is rotatable about an axis extending in longitudinal direction of the wall, wherein in the case of a plurality of tongues at least two of the tongues (33 a-c) preferably have a different length.

14. Wall system as claimed in any of the foregoing claims 9-13, wherein the wall system further comprises an at least substantially U-shaped connecting profile (3) for receiving the support body (2), wherein a side wall (31) of the U-shaped connecting profile (3) is provided with the spacer means.

15. Wall system as claimed in any of the foregoing claims 9-14, also comprising a skirting (5), wherein the skirting comprises spacer means, wherein the support body (2) and/or the connecting profile (3) comprises at least one stop surface co-acting with the spacer means of the skirting (5).

16. Wall system as claimed in any of the foregoing claims 8-15, comprising a panel support body (6) adapted to support a panel of the wall system, wherein the panel support body can be arranged adjustably, preferably slidably, in the width direction (X) of the wall system on the top side of the support body (2).

## Patentansprüche

1. Tragkörper (2) zum Tragen eines Profils (4) in einem Abstand von einer Bodenoberfläche, wobei sich mindestens drei Finger (22a, 22b) von dem Tragkörper (2) erstrecken, **dadurch gekennzeichnet, dass** der Tragkörper (2) eingerichtet ist zum Tragen eines Profils (4) von mindestens im Wesentlichen C-förmigem Querschnitt, der eine Wand (41) mit einer Dicke (d) aufweist, und wobei mindestens einer der Finger zum Zwecke des Bildens einer Verbindungsebene (24) zwischen den Fingern (22a, 22b) zum Aufnehmen der Wand (41) des Profils (4) versetzt angeordnet ist, wobei die Tiefe (d) der Verbindungsebene (24) der Dicke (d) der Wand (41) des Profils (4) entspricht, um eine Bewegung des Profils (4) relativ zu dem Tragkörper (2) in einer Richtung quer zur Wand (41) dieses Profils (4) einzuschränken und um eine Drehung um die Längsachse des Profils (4) einzuschränken.

2. Tragkörper (2) gemäß Anspruch 1, wobei sich die Finger mindestens im Wesentlichen in einer Ebene erstrecken, wobei ein Finger in einer Richtung quer zu dieser Ebene versetzt angeordnet ist.

3. Tragkörper (2) gemäß Anspruch 1 oder 2, wobei sich mindestens zwei Finger auf beiden Seiten der Verbindungsebene (24) erstrecken.

4. Tragkörper (2) gemäß Anspruch 1, 2 oder 3, wobei der Tragkörper (2) eine im wesentlichen plattenähnliche Form einnimmt, wobei die Finger (22a, 22b) sich von einer oberen Seite des Tragkörpers (2) erstrecken, wobei mindestens ein Finger sich außerhalb der Ebene des Tragkörpers in einer Ebene parallel zu dieser Ebene erstreckt.

5. Tragkörper (2) gemäß Anspruch 4, wobei sich jeder der Finger (22a, 22b) zum Bilden der Verbindungsebene (24) außerhalb der Ebene des Tragkörpers (2) erstreckt.

6. Tragkörper (2) gemäß einem der vorhergehenden Ansprüche 1 bis 5, wobei der Tragkörper (2) eingerichtet ist, die Rückwand (41) des C-förmigen Profils (4) zwischen den Fingern aufzunehmen, wobei sich zwei Finger (23) von dem Tragkörper (2) in einem gegenseitigen Abstand erstrecken, der im Wesentlichen der Breite der Rückwand (41) des C-förmigen Profils (4) entspricht.

7. Tragkörper (2) gemäß Anspruch 6, wobei sich die zwei Finger (23) in der Verbindungsebene (24) erstrecken, wobei mindestens zwei andere Finger (22a, 22b) auf beiden Seiten versetzt von der Verbindungsebene (24) angeordnet sind.

8. Wandsystem, das mindestens ein Profil (4) von mindestens im Wesentlichen C-förmigem Querschnitt mit einer Wand (41) mit einer Dicke (d) und mindestens einen Tragkörper (2) gemäß einem der vorhergehenden Ansprüche 1 bis 7 umfasst.

9. Wandsystem gemäß Anspruch 8, das ebenfalls Verbindungsmittel zum Verbinden einer Leiste (5) umfasst, wobei das Wandsystem ebenfalls Abstandsmittel zum Halten der Leiste (5) in einem vorgegebenen Abstand von dem Wandsystem umfasst, wobei das Abstandsmittel eine drehbare Zunge (33 a-c) umfasst.

10. Wandsystem gemäß Anspruch 9, wobei das Abstandsmittel eine Oberfläche (31, 52) umfasst, wobei die Zunge durch eine Ausnehmung gebildet wird, die sich in der Oberfläche (31, 52) erstreckt.

11. Wandsystem gemäß Anspruch 9 oder 10, wobei das Abstandsmittel eine Anzahl von Zungen (33 a-c) zum Halten der Leiste (5) in unterschiedlichen Abständen von dem Wandsystem umfasst.

12. Wandsystem gemäß Anspruch 9, 10 oder 11, wobei die Zunge (33 a-c) des Abstandsmittels um eine Achse (X2) drehbar ist, die im Wesentlichen rechtwinklig zu der sichtbaren Oberfläche der Leiste (5) liegt.

13. Wandsystem gemäß Anspruch 9, 10 oder 11, wobei die Zunge (33 a-c) um eine Achse drehbar ist, die sich in Längsrichtung der Wand erstreckt, wobei in dem Falle einer Anzahl von Zungen mindestens zwei der Zungen (33 a-c) bevorzugt eine unterschiedliche Länge aufweisen.

14. Wandsystem gemäß einem der vorhergehenden Ansprüche 9 bis 13, wobei das Wandsystem weiter ein mindestens im wesentlichen U-förmiges Verbindungsprofil (3) zum Aufnehmen des Tragkörpers (2) umfasst, wobei eine Seitenwand (31) des U-förmigen Verbindungsprofils (3) mit dem Abstandsmittel versehen ist.

15. Wandsystem gemäß einem der vorhergehenden Ansprüche 9 bis 14, das ebenfalls eine Leiste (5) umfasst, wobei die Leiste Abstandsmittel umfasst, wobei der Tragkörper (2) und/oder das Verbindungsprofil (3) mindestens eine Anschlagfläche umfasst, die mit dem Abstandsmittel der Leiste (5) zusammenwirkt.

16. Wandsystem gemäß einem der vorhergehenden Ansprüche 8 bis 15, das einen Paneeltragkörper (6) umfasst, der eingerichtet ist, ein Paneel des Wandsystems zu tragen, wobei der Paneeltragkörper verstellbar, bevorzugt verschiebbar, in der Breitenrichtung (X) des Wandsystems auf der Oberseite des Tragkörpers (2) angeordnet werden kann.

## Revendications

1. Corps de support (2) pour supporter un profilé (4) à une distance d'une surface de sol, dans lequel au moins trois doigts (22a, 22b) s'étendent à partir du corps de support (2), **caractérisé en ce que** le corps de support (2) est agencé pour supporter un profilé (4) d'au moins une section transversale sensiblement en forme de C ayant une paroi (41) avec une épaisseur (d) et dans lequel au moins l'un des doigts est agencé de manière décalée afin de former un plan de raccordement (24) entre les doigts (22a, 22b) pour recevoir la paroi (41) du profilé (4), dans lequel la profondeur (d) du plan de raccordement (24) correspond à l'épaisseur (d) de la paroi (41) du profilé (4) pour limiter le mouvement du profilé (4) par rapport au corps de support (2) dans une direction transversale de la paroi (41) de ce profilé (4) et pour limiter la rotation autour de l'axe longitudinal du profilé (4).

2. Corps de support (2) selon la revendication 1, dans lequel les doigts s'étendent au moins sensiblement dans un plan, dans lequel un doigt est agencé de manière décalée dans une direction transversale de ce plan.

3. Corps de support (2) selon la revendication 1 ou 2, dans lequel au moins deux doigts s'étendent de chaque côté du plan de raccordement (24).

4. Corps de support (2) selon la revendication 1, 2 ou 3, dans lequel le corps de support (2) prend une forme sensiblement en forme de plaque, dans lequel les doigts (22a, 22b) s'étendent à partir d'un côté supérieur du corps de support (2), dans lequel au moins un doigt s'étend vers l'extérieur du plan du corps de support dans un plan parallèle à ce plan.

5. Corps de support (2) selon la revendication 4, dans lequel chacun des doigts (22a, 22b) pour former le plan de raccordement (24), s'étend à l'extérieur du plan du corps de support (2).

6. Corps de support (2) selon l'une quelconque des revendications 1 à 5, dans lequel le corps de support (2) est adapté pour recevoir la paroi arrière (41) du profilé en forme de C (4) entre les doigts, dans lequel deux doigts (23) s'étendent à partir du corps de support (2) à une distance mutuelle correspondant sensiblement à la largeur de la paroi arrière (41) du profilé en forme de C (4).

7. Corps de support (2) selon la revendication 6, dans lequel les deux doigts (23) s'étendent dans le plan de raccordement (24), dans lequel au moins deux autres doigts (22a, 22b) sont agencés sur chaque côté décalé du plan de raccordement (24).

8. Système de paroi comprenant au moins un profilé (4) d'au moins une section transversale sensiblement en forme de C ayant une paroi (41) avec une épaisseur (d) et au moins un corps de support (2) selon l'une quelconque des revendications 1 à 7.

9. Système de paroi selon la revendication 8, comprenant également des moyens de raccordement pour raccorder une sous-jupe (5), dans lequel le système de paroi comprend également des moyens d'espacement pour maintenir la sous-jupe (5) à une distance prédéterminée du système de paroi, dans lequel les moyens d'espacement comprennent une languette rotative (33 a-c).

10. Système de paroi selon la revendication 9, dans lequel les moyens d'espacement comprennent une surface (31, 52), dans lequel la languette est formée par un évidement s'étendant dans la surface (31, 52).

11. Système de paroi selon la revendication 9 ou 10, dans lequel les moyens d'espacement comprennent une pluralité de languettes (33 a-c) pour maintenir la sous-jupe (5) à des distances différentes du système de paroi.

12. Système de paroi selon la revendication 9, 10 ou 11, dans lequel la languette (33 a-c) des moyens d'espacement peut tourner autour d'un axe (X2) qui est sensiblement perpendiculaire à la surface visuelle de la sous-jupe (5).

13. Système de paroi selon la revendication 9, 10 ou 11, dans lequel la languette (33 a-c) peut tourner autour d'un axe s'étendant dans la direction longitudinale de la paroi, dans lequel, dans le cas d'une pluralité de languettes, au moins deux des languettes (33 a-c) ont de préférence une longueur différente.

14. Système de paroi selon l'une quelconque des revendications 9 à 13, dans lequel le système de paroi comprend en outre au moins un profilé de raccordement sensiblement en forme de U (3) pour recevoir le corps de support (2), dans lequel une paroi latérale (31) du profilé de raccordement en forme de U (3) est prévue avec les moyens d'espacement.

15. Système de paroi selon l'une quelconque des revendications 9 à 14, comprenant également une sous-jupe (5), dans lequel la sous-jupe comprend des moyens d'espacement, dans lequel le corps de support (2) et/ou le profilé de raccordement (3) comprend au moins une surface de butée co-agissant avec les moyens d'espacement de la sous-jupe (5).

16. Système de paroi selon l'une quelconque des revendications 8 à 15, comprenant un corps de support de panneau (6) adapté pour supporter un panneau du système de paroi, dans lequel le corps de support de panneau peut être agencé de manière ajustable, de préférence de manière coulissante, dans le sens de la largeur (X) du système de paroi sur le côté supérieur du corps de support (2).
